# EUROPEAN PATENT APPLICATION

(11) **EP 2 810 775 A1**
(43) Date of publication of application: **10.12.2014**
(21) Application number: 13744269.5
(22) Date of filing: 18.01.2013
(51) Int. Cl.: B32B 27/00, B29C 51/16, B29L 9/00

(54) **FILM FOR FORMING DECORATION**

(30) Priority: 31.01.2012 JP 2012017877
(71) Applicant: Toray Industries, Inc., Tokyo 103-8666 (JP)
(72) Inventor: MORI, Kentaro, Otsu-shi Shiga 520-8558 (JP); MINOMO, Katsuhiro, Otsu-shi Shiga 520-8558 (JP)
(74) Representative: Kador & Partner
(86) International application number: PCT/JP2013/050877
(87) International publication number: WO 2013/114964

(57) **Abstract**

The present invention aims to provide a decorative molding film having a laminated structure in which a coloring layer, protective layer and a base film are stacked in this order or in which the base film is disposed between the coloring layer and the protective layer, wherein the rupture elongation of said base film and said protective layer at 120°C is 200% or more, wherein said coloring layer comprises at least a binder resin, and a glittering material with an average longer diameter of from 5 to 12 µm, and wherein the stress at 100% elongation of said coloring layer at 120°C is 4 MPa or less; which decorative molding film has less occurrence of surface irregularity at a highly stretched region.

## Description

### TECHNICAL FIELD

The present invention relates to a decorative molding film for film decoration of an object to be decorated used in building materials, mobile phones, electrical appliances, game machine parts, automobile parts and the like, which decorative molding film has a good followability even to an object to be decorated with a complicated shape, such as one with a deep-drawn portion, and less occurrence of surface irregularity at a highly stretched region; and to a method for producing a decorated molding using the same.

### BACKGROUND ART

With growing awareness of environment in recent years, there is a growing demand for solventless coating and plating replacement for use in objects to be decorated such as building materials, mobile phones, electrical appliances, game machine parts and automobile parts, and decoration methods using films are increasingly introduced. Decoration methods using films typically include a process in which a decorative molding film, provided beforehand with a functional layer including a decorative layer, is bonded to a surface of an object to be decorated in order to provide decorative characteristics to the object to be decorated.

Several proposals regarding decorative molding films have been made. In patent document 1, for example, use of a decorative film for glass decoration, composed of a polyester film having a layer containing glittering pigment on one side, has been proposed. In patent document 2, a laminated film provided with an acrylic emulsion layer containing scaly aluminium particles with a smooth surface has been proposed. For film decoration of an object to be decorated with a complicated shape, a laminated decorative molding film capable of decorating the object along its uneven surface has been proposed, as described in patent documents 3 and 4.

### PRIOR ART REFERENCES

### PATENT DOCUMENTS

Patent document 1: JP 2006-264299 A
Patent document 2: JP 5-111991 A
Patent document 3: JP 3984923 B
Patent document 4: JP 3663304 B

### SUMMARY OF THE INVENTION

### PROBLEMS TO BE SOLVED BY THE INVENTION

The methods proposed in patent documents 1 and 2 provide excellent decorative characteristics when the film is bonded to an object to be decorated as it is without being stretched. However, they have a problem that, when the surface of the object to be decorated has a complicated shape, the film may tear, or may float, not following along the surface of the object, at a deep-drawn portion. The method proposed in patent document 3 has a problem with surface quality such as image sharpness and smoothness, because a marked surface irregularity occurs at a highly stretched region. In addition, the method proposed in patent document 4 has a problem of poor productivity, because it requires longer time for molding.

Accordingly, an object of the present invention is to provide a decorative molding film which has a good followability even to an object to be decorated with a complicated shape, such as one with a deep-drawn portion, less occurrence of surface irregularity at a highly stretched region, and an excellent productivity.

### MEANS FOR SOLVING THE PROBLEMS

The decorative molding film of the present invention adopts the following constitution in order to solve the problems described above. Specifically, the decorative molding film has a laminated structure in which a coloring layer, protective layer and a base film are stacked in this order or in which the base film is disposed between the coloring layer and the protective layer, wherein the rupture elongation of said base film and said protective layer at 120°C is 200% or more, wherein said coloring layer comprises at least a binder resin, and a glittering material with an average longer diameter of from 5 to 12 µm, and wherein the stress at 100% elongation of said coloring layer at 120°C is 4 MPa or less.

In addition, the decorated molding production method of the invention is a process which employs the decorative molding film of the present invention. Specifically, the decorated molding production method of the invention is a process in which the decorative molding film of the present invention is bonded to an object to be decorated by heat molding.

### EFFECT OF THE INVENTION

The decorative molding film of the present invention serves to achieve a good moldability in decorative molding using a heat molding method. The decorative molding film of the present invention is capable of producing a decorated molding having a good surface appearance even when applied to an object to be decorated having a deep-drawn portion (concave portion) with a large molding ratio, making it suitable for decoration of objects to be decorated such as building materials, mobile phones, electrical appliances, game machine parts and automobile parts.

### BRIEF DESCRIPTION OF THE DRAWINGS

Fig. 1 is a schematic cross section view illustrating the first aspect of the decorative molding film of the present invention.
Fig. 2 is a schematic cross section view illustrating the second aspect of the decorative molding film of the present invention.
Fig. 3 is a figure illustrating the method of evaluating the degree of orientation of the glittering material, which is the processed image (10 µm × 10 µm) on which line Cs and line Ds are drawn.
Fig. 4 is a figure illustrating the intersections of line Cs and particles of the glittering material and the intersections of line Ds and particles of the glittering material in Fig. 3.

### MODE FOR CARRYING OUT THE INVENTION

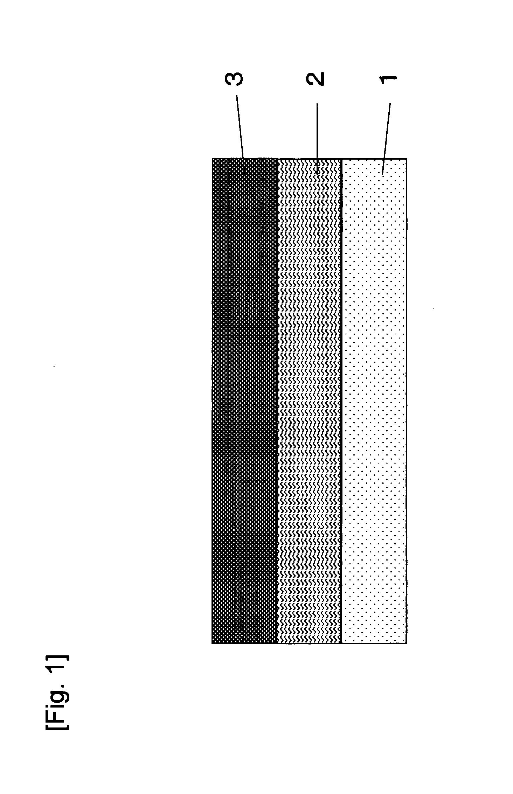

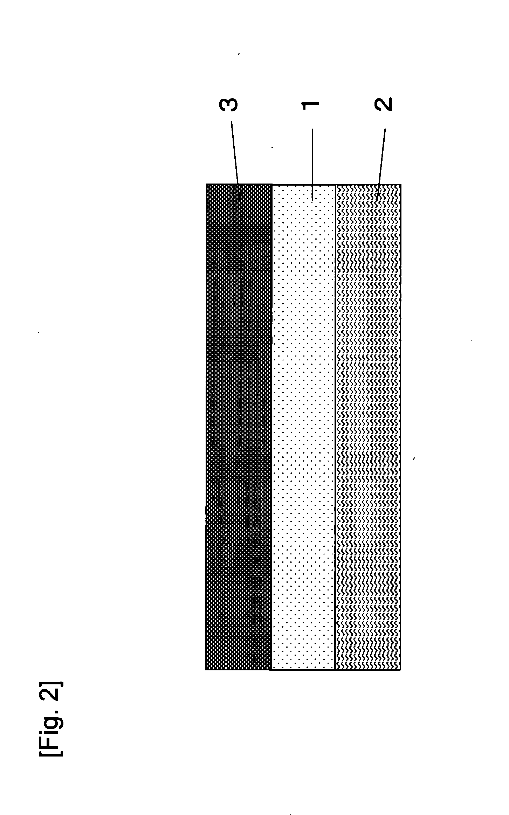

The decorative molding film of the present invention is a decorative molding film having a laminated structure in which (i) coloring layer 3, protective layer 2 and base film 1 are stacked in this order as shown in Fig. 1, or in which (ii) base film 1 is disposed between coloring layer 3 and protective layer 2 as shown in Fig. 2, wherein the rupture elongation of said base film and said protective layer at 120°C is 200% or more, wherein said coloring layer comprises at least a binder resin, and a glittering material with an average longer diameter of from 5 to 12 µm, and wherein the stress at 100% elongation of said coloring layer at 120°C is 4 MPa or less.

According to the present invention, the rupture elongation of the base film and the protective layer at 120°C refers to the elongation at which the sample of the base film or the protective layer ruptured, when the sample cut into a rectangle of 50 mm test length was subjected to tensile test at a strain rate of 300 mm/min after being preheated in a constant temperature layer controlled at 120°C for 60 seconds. According to the present invention, the stress at 100% elongation of the coloring layer at 120°C refers to the stress value of the coloring layer sample at 100% elongation, when the sample was subjected to tensile test at a strain rate of 300 mm/min after being preheated in a constant temperature layer controlled at 120°C for 60 seconds.

The sample of the protective layer and the coloring layer can be obtained by forming a layer on a mold releasing film and then peeling off the layer from the mold releasing film. When the coloring layer and the protective layer have already been laminated on the base film, the sample can be obtained by polishing and eliminating the base film and other layer.

The decorative molding film of the present invention having a laminated structure in which (i) a coloring layer, a protective layer and a base film are stacked in this order, or in which (ii) the base film is disposed between the coloring layer and the protective layer, is capable of decorating an object to be decorated by laminating the decorative molding film on the object to be decorated in such a way that the coloring layer faced the surface of the object, and then bonding the layer to the object by heat molding, as shown below. (Although the object to be decorated is not included in the decorative molding film of the present invention, it is described in parentheses to clearly illustrate the application aspects of the decorative molding film of the present invention).
(i) base film/ protective layer/ coloring layer (/object to be decorated)
(ii) protective layer/ base film/ coloring layer (/object to be decorated).

When assuming the configuration of (i), the base film needs to be peeled off so that the protective layer is exposed to the outermost surface after the decorative molding. Hereinafter, a composite layer composed of from the protective layer to the coloring layer, having each of the following configurations formed on the object to be decorated, may be referred to as a decorative layer.

The protective layer/ coloring layer, after the base film has been peeled off, when assuming the configuration of (i)

The protective layer/ base film/ coloring layer, when assuming the configuration of (ii)

The decorative molding film of the present invention as described above can be used for decoration of the object to be decorated to achieve solventless coating, replacement of plating and the like. As a result, it serves to reduce the number of steps required for decorative layer formation, improve the production efficiency for moldings having a decorative layer, and reduce the cost, as compared to traditional decoration methods using coating which require a large number of steps. It also serves to decrease the release of environmentally hazardous substances such as volatile organic compounds and CO₂.

### [Base film]

As the base film of the present invention, a film having a rupture elongation. of 200% or more at 120°C is used. It is preferable that the base film has a rupture elongation not exceeding 1000 % at 120°C, because the surface quality of the base film does not deteriorate when a protective layer or a coloring layer is disposed on the base film. In terms of moldability, heat resistance and surface quality, the base film more preferably has a rupture elongation of from 200 to 800%, even more preferably from 250 to 700%. Materials which can be used as the base film of the invention can be produced by processing a thermoplastic resin such as, but not limited to, polyolefin, polyester, polyvinyl chloride, poly(meth)acrylate, polyamide, polyester amide, polyether, polystyrene, polyether ester, and polycarbonate. Furthermore, it may be in the form of an unstretched film, uniaxially stretched film, or biaxially stretched film. The base film may be either a monolayer film or a laminate film composed of two or more layers produced by coextrusion, lamination, mold-release coating, or the like.

The base film preferably has a thickness of 75 µm or more and 500 µm or less, in terms of the rupture strength and shape retention of the molding after the molding process. More preferably, the thickness is 100 µm or more and 300 µm or less, particularly preferably 150 µm or more and 250 µm or less. During the production process of the decorative molding film, the thickness of the base film can be measured using a micrometer according to JIS C-2151 (2006), upon formation of each layer. When the base film has already been laminated with the coloring layer and the protective layer, the thickness of the base film can be measured by observing the cross section using a differential interference microscope, laser microscope, electron microscope or the like.

### [Protective layer]

In the present invention, the protective layer assumes the outermost layer of the decorated molding obtained by decorative molding of a molding using the decorative molding film. Accordingly, it is necessary for the protective layer to be of a resin that does not impair the moldability of the decorative molding film and have decorative characteristics such as transparency and glossiness as well as good coating characteristics such as abrasion resistance, impact resistance, chemical resistance, and weather resistance.

As the protective layer of the present invention, a protective layer having a rupture elongation at 120°C of 200% or more is used. It is preferable for the protective layer to have a rupture elongation at 120°C not exceeding 1000%, because decorative characteristics such as transparency and glossiness, as well as coating characteristics such as abrasion resistance, impact resistance, chemical resistance and weather resistance can be maintained. In terms of moldability and other coating characteristics, the rupture elongation is preferably from 200 to 800%, more preferably from 250 to 700%. Examples of materials which can be used as the protective layer of the present invention include thermosetting resins, thermoplastic resins, light curing resins and ultraviolet ray curing resins. Examples of thermosetting resins which can be used include polycarbonate resins, acrylic resins, polyester resins, phenoxy resins, epoxy resins and polyolefin resins. Examples of thermoplastic resins which can be used include polyethylene resins, polypropylene resins, polycarbonate resins, acrylic resins and polystyrol resins. As the light curing resin or the ultraviolet ray curing resin, one or more selected from the group consisting of, for example, urethane acrylate resins, polyester acrylate resins, unsaturated polyester resins, silicone acrylate resins, and epoxy acrylate resins may be used, in combination with an appropriate light initiator if necessary. These resins may contain a curing agent, curing accelerator, binding agent, surface adjustor, pigment, plasticizer, ultraviolet absorber, and photostabilizer if necessary. Furthermore, these resins may be either a copolymer or a mixture of heterogeneous resins. When a light curing resin or an ultraviolet ray curing resin is used, it is preferable to perform curing treatment after molding to maintain a better moldability.

It is preferable that the protective film has a thickness of 10 µm or more and 70 µm or less. A thickness of 10 µm or more allows the protective layer to have coating characteristics as described above. If the thickness is 70 µm or less, the film will have a flat surface while being not too thick, and a coloring layer can be formed easily on it. The lower limit of the thickness is more preferably 20 µm or more. The upper limit of the thickness is more preferably 50 µm or less. The thickness of the protective layer can be measured by observing the cross section of the layer using a differential interference microscope, laser microscope, electron microscope or the like. The discrimination of the boundary between of the protective layer and the coloring layer is described in the coloring layer section. The actual measuring method (e.g. taking measurements of measuring points) is in accordance with the method described herein.

### [Coloring layer]

The coloring layer of the present invention is a layer which comprises at least a binder resin and a glittering material.

As the binder resin of the present invention, any of the thermoplastic resins, thermosetting resins, light curing resins and ultraviolet ray curing resins can be used. Examples of thermoplastic resins which can be used include polyethylene resins, polypropylene resins, polycarbonate resins, acrylic resins and polystyrol resins. Examples of thermosetting resins which can be used include unsaturated polyester resins, phenol resins, epoxy resins, acrylic resins, urethane resins, melamine resins, urea resins and polycarbonate resins. As the light curing resin or the ultraviolet ray curing resin, one or more selected from the group consisting of, for example, urethane acrylate resins, polyester acrylate resins, unsaturated polyester resins, silicone acrylate resins, and epoxy acrylate resins may be used, in combination with an appropriate light initiator if necessary. These resins may contain a curing agent, curing accelerator, binding agent, surface adjustor, dye, plasticizer, ultraviolet absorber, and photostabilizer if necessary. Furthermore, these resins may be either a copolymer or a mixture of heterogeneous resins.

### [Glittering material]

As the glittering material of the present invention, one or more selected from the group consisting of aluminum flakes, micas, glass flakes and the like can be used. The glittering material may also be provided with a resin coating or coloring if necessary.

The glittering material used for the present invention has the average longer diameter of from 5 to 12 µm, so as to provide a good film forming property of the coloring layer and a good surface appearance even when applied to an object to be decorated having a deep-drawn portion with a large molding ratio. If the average longer diameter is greater than 12 µm, it may be difficult to provide a good surface appearance at a deep-drawn portion with a large molding ratio. If the average longer diameter is less than 5 µm, a desired color or texture may not be obtained. The lower limit of the average longer diameter of the glittering material is more preferably 7 µm, and the upper limit of the average longer diameter of the glittering material is more preferably 11 µm. The average longer diameter referred to here means the length of the longest diameter of the particle of the glittering material in the measured plane. The average longer diameter of the glittering material is defined by the following measuring method. Specifically, using a scanning electron microscope at a 3000-fold magnification, one particle of the glittering material is imaged at an angle which provides the largest projected area and the longest diameter of the particle is measured, and the longest diameter measured is determined as the longer diameter of the glittering material. The measurements are performed for 100 particles of the glittering material, and the average of the 100 particles is determined as the average longer diameter of the glittering material.

The average shorter diameter of the glittering material is preferably from 0.05 to 1 µm, so as to provide a good film forming property of the coloring layer and a good surface appearance even when applied to an object to be decorated having a deep-drawn portion with a large molding ratio. If the average shorter diameter is greater than 1 µm, a good surface appearance may not be obtained or the coloring layer may be fragile at a deep-drawn portion with a large molding ratio. If the average shorter diameter is less than 0.05 µm, a good feeling of glittering may not be obtained. The average shorter diameter of the glittering material is more preferably from 0.1 to 1 µm, and most preferably from 0.1 to 0.5 µm. The average shorter diameter referred to here means the length of the shortest diameter of the particle of the glittering material in the measured plane. The average shorter diameter of the glittering material is defined by the following measuring method. Specifically, using a scanning electron microscope at a 30000-fold magnification, one particle of the glittering material is imaged at an angle which provides the smallest projected area and the shortest diameter of the particle is measured, and the shortest diameter measured is determined as the shorter diameter of the glittering material. The measurements are performed for 100 particles of the glittering material, and the average of the 100 particles is determined as the average shorter diameter of the glittering material.

The content of the glittering material is preferably from 5 to 15% by mass relative to 100% by mass of the entire coloring layer, so as to provide a good surface appearance and a feeling of glittering with excellent decorative characteristics even when applied to an object to be decorated having a deep-drawn portion with a large molding ratio. The glittering material content of 5% by mass or more is preferred, because the difference in color between portions with a large molding ratio and a small molding ratio will be reduced. The glittering material content of 15% by mass or less is preferred, because the rupture elongation will not be impaired due to the coloring layer being not too fragile, and followability to a deep-drawn portion with a large molding ratio will be improved. The glittering material content is more preferably from 7 to 15% by mass, and most preferably from 7 to 13% by mass. The glittering material content in the coloring layer can be measured by: extracting the binder resin using a solvent (eg., dichloroethane) which dissolves the binder resin in the coloring layer, and then separating the glittering material by centrifugation to measure the mass of the entire coloring layer and the glittering material; and then by calculating the content of the glittering material. When the coloring layer has already been laminated with a base film and/or other layers, other layers may first be polished and eliminated before the above operation is performed.

The degree of orientation of the glittering material contained in the coloring layer is preferably 0.3 or more and 0.7 or less in order to provide a good surface appearance and a feeling of glittering with excellent decorative characteristics. If the degree of orientation is 0.3 or more, a feeling of glittering with excellent decorative characteristics can be obtained. If the degree of orientation is 0.7 or less, a good surface appearance can be obtained even when molded to an object to be decorated having a deep-drawn portion with a large molding ratio. The degree of orientation of the glittering material is more preferably 0.35 or more and 0.60 or less, even more preferably, 0.40 or more and 0.50 or less.

In the present invention, the degree of orientation of the glittering material is an index representing how particles of the glittering material are arranged in the coloring layer. Specifically, it indicates that, the smaller the degree of orientation of the glittering material, the more vertically the longer diameter direction of the particles of the glittering material is arranged toward the thickness direction of the coloring layer. The degree of orientation varies depending on the thickness of the coloring layer, the size of the particles of the glittering material, the viscosity of the coating material for coloring layer, and the rate of the processes such as coating rate of the coloring layer.

The thickness of the coloring layer is preferably 15 µm or more and 50 µm or less. More preferably, it is 20 µm or more and 40 µm or less. If the thickness is less than 5 µm, the coloring layer with a desired color may not be obtained. If the thickness is more than 50 µm, the surface of the coloring layer may not be flat. In addition, if sufficient shearing force is not applied on the glittering material in the binder resin during the coating process, it may result in larger degree of orientation of the glittering material, and a surface appearance with a feeling of glittering may not be obtained.

The thickness of the coloring layer can be measured by observing the cross section of the coloring layer using a differential interference microscope, laser microscope, electron microscope or the like. Specific measuring methods include, for instance, cutting the decorative molding film using a microtome so as to provide the smallest projected area. The thickness of the coloring layer is measured by observing the obtained cross section using a laser microscope at a 3000-fold magnification. The boundary between the coloring layer and the adjacent protective layer or base film is determined by whether the glittering material is contained or not.

There is a preferred range for the viscosity of the coating material for coloring layer in order to provide a good appearance. The lower limit of the viscosity of the coating material for coloring layer is preferably 500 mPa s or more, more preferably 1000 mPa s or more. If the viscosity of the coating material for coloring layer is less than 500 mPa s, the convection occurring upon volatilization of the solvent in the coating material for coloring layer may cause particles of the glittering material to move, resulting in larger degree of orientation, and an appearance with a feeling of glittering may not be obtained. This is because the convection occurring upon volatilization of the solvent contained in the coating material for coloring layer during the drying process after the coating may cause the particles of the glittering material to move, and the degree of orientation may be too large. If the degree of orientation becomes too large, an appearance with a feeling of glittering may not be obtained.

On the other hand, the upper limit of the viscosity of the coating material for coloring layer is preferably 3000 mPa s or less, more preferably 2500 mPa s or less. If the viscosity of the coating material for coloring layer is greater than 3000 mPa s, an appearance with a feeling of glittering may not be obtained. It is because sufficient shearing force may not be applied to the glittering material in the coating material for coloring layer during the coating process, and particles of the glittering material may not be oriented horizontally with the coating direction, resulting in larger degree of orientation.

Accordingly, the preferred range for the viscosity of the coating material for coloring layer is 500 mPa s or more and 3000 mPa s or less, more preferably 1000 mPa s or more and 2500 mPa s or less. The viscosity of the coating material for coloring layer within this range is preferred because the degree of orientation of the glittering material can be maintained within the suitable range and a good appearance with a feeling of glittering can be obtained. The viscosity of the binder resin can be measured according to JIS Z 8803-9:2011.

If the coating rate of the coating material for coloring layer is too slow, particles of the glittering material in the binder resin may not be arranged horizontally toward the coating direction, and a good appearance with a feeling of glittering may not be obtained. Accordingly, the lower limit of the coating rate is preferably 0.5 m/min or more. On the other hand, if the coating rate is too fast, adjusting the coating thickness of the coating material for coloring layer may be difficult, or the arrangement of particles of the glittering material in the coating material for coloring layer may be disturbed. Accordingly, the upper limit of the coating rate is preferably 20 m/min or less, more preferably 15 m/min or less, and even more preferably 10 m/min or less. Thus, the coating rate is preferably 0.5 m/min or more and 20 m/min, more preferably 0.5 m/min or more and 15 m/min or less, and even more preferably 0.5 m/min or more and 10m/min or less. The coating rate within this range is preferred, because the degree of orientation of the glittering material can be maintained within the suitable range, and a good appearance can be obtained.

In terms of enabling application to an object with a complicated shape, the stress at 100% elongation at 120°C is preferably 4 MPa or less, more preferably 2 MPa or less. It is preferable for the molding film to have a stress at 100% elongation at 120°C of 4 MPa or less, because the coloring layer will be stretched evenly even at a deep-drawn portion with a large molding ratio, and a good surface appearance can be obtained. If the stress at 100% elongation at 120°C is greater than 4 MPa, the coloring layer will be stretched unevenly, and it will be difficult to obtain a good surface appearance. Furthermore, a crack may occur due to insufficient molding followability.

The stress at 100% elongation at 120°C is preferably 0.05 MPa or more, more preferably 0.1 MPa or more. If the stress at 100% elongation at 120°C is less than 0.05 MPa, the heat applied during the molding may cause the coloring layer to flow, and it may be difficult to obtain a desired decorative characteristics.

The stress at elongation of the coloring layer can be measured by the methods described in the Examples. When the coloring layer has already been laminated with a base film and/or other layers, other layers may first be polished and eliminated before measuring the stress with the method described in Examples.

There are no specific limitations on the method for adjusting the stress at 100% elongation at 120°C of the coloring layer of the present invention to 4 MPa or less. Examples include: a method of increasing the amount of the cross-linker added to raise the glass transition temperature (decreasing the amount of the curing agent added lowers the temperature), when using isocyanate cross-linker as the curing agent, for instance, so that the coloring layer will have a glass transition temperature of 110°C or less; and a method of arbitrarily selecting multiple resins from said binder resins to adjust the glass transition temperature. The glass transition temperature referred to here means the temperature that is measured and analyzed using differential scanning calorimeter according to JIS K7121-1987 and JIS K7122-1987. Specifically, 5 mg of the coloring layer was used as a sample, and the specific heat transition based on the transition from glassy state to rubbery state when the temperature was raised from 25°C to 300°C at 20°C/min was read. Then the glass transition temperature is determined by obtaining the midpoint glass transition temperature, which is the intersection of: a straight line located equidistant from straight lines obtained by extending both base lines in a longitudinal axis (axis indicating the heat flux) direction; and a curved line showing a step change during glass transition. When multiple glass transition temperatures exist, a glass transition temperature in a higher temperature side was used.

When multiple glass transition temperatures for the coloring layer exist, a glass transition temperature in a higher temperature side is used.

In terms of enabling application to an object with a complicated shape, the rupture elongation of the coloring layer at 120°C is preferably 300% or more. If the rupture elongation at 120°C is 300% or more, it can be preferably applied to applications in which deep-draw moldability is required. In the present invention, the rupture elongation of the coloring layer at 120°C refers to the elongation at which the sample of the coloring layer ruptured, when the sample cut into a rectangle of 50 mm test length was subjected to tensile test at a strain rate of 300 mm/min after being preheated in a constant temperature layer controlled at 120°C for 60 seconds. The sample of the coloring layer can be obtained by forming a layer on a mold releasing film and then peeling off the layer from the mold releasing film. When the coloring layer has already been laminated with a base film and/or a protective layer, the sample can be obtained by polishing and eliminating the base film and other layer.

Examples of methods for adjusting the rupture elongation at 120°C of the coloring layer of the present invention to 300% or more include a method of arbitrarily selecting resins from said binder resins so that the coloring layer will have a glass transition temperature of 110°C or less.

The coloring layer may cover the surface of the protective layer entirely or partially. Furthermore, a coloring layer covering the entire surface and another coloring layer covering part of the surface may be laminated one on top of the other. In the case where a coloring layer covering the entire surface and another coloring layer covering part of the surface are laminated one on top of the other, it is preferable that both coloring layers meet the characteristics requirements described above.

### [Adhesive layer]

Said decorative molding film may further have an adhesive layer on the coloring layer. Having an adhesive layer allows the decorative molding film to stretch upon molding, and ensures that the film is bonded strongly to an object to be decorated. There are no specific limitations on the adhesive layer as long as the layer has adhesiveness to the object to be decorated and a rupture elongation at 120°C of 200% or more. Examples include layers composed of an acrylic adhesive, a urethane-based adhesive, a polyester-based adhesive, an olefin-based adhesive or the like. Usually, the adhesive layer of the present invention preferably has a thickness of from 5 to 50 µm, more preferably from 10 to 40 µm. The adhesives layer with a thickness of 5 µm or more is preferred, because adhesiveness to the object to be decorated can be provided. The adhesive layer with a thickness of 50 µm or less is also preferred, because the film will not be too thick and its surface will be flat. During the manufacture process of the decorative molding film, the thickness of the adhesive layer can be measured using a micrometer according to JIS-C-2151:2006, upon formation of each layer. When the object to be decorated has already been laminated with a decorative layer, the thickness of the adhesive layer can be measured by observing the cross section using a differential interference microscope, laser microscope, electron microscope or the like.

### [Method for producing a decorated molding]

For production of a decorated molding using the decorative molding film of the present invention, a known heat molding method capable of decorating a molding with a three-dimensional shape, such as vacuum molding and air-pressure molding, can be applied without specific limitations. In terms of moldability of the decorative molding film and its adhesiveness to an object to be decorated, it is preferable that a decorated molding having a composite layer, composed of a protective layer and a coloring layer, formed on the surface of the object to be decorated is produced by: heating a decorative molding film under vacuum to a temperature equal to or higher than the softening point of the base film; and bonding the film to the object to be decorated by heat molding while maintaining the coloring layer or the adhesive layer of the film in contact with the surface of the object to be decorated. This decoration method serves to decrease the number of steps required for decorative layer formation and significantly improve the production efficiency for decorated moldings with a decorative layer, as compared to decoration method using coating which require a large number of steps.

### EXAMPLES

The present invention will now be illustrated with reference to Examples, but it should be understood that the invention is not construed as being limited thereto. The methods used for evaluation of samples prepared in Examples and Comparative examples are as described below. In Examples and Comparative examples given below, an unstretched polyethylene terephthalate film with a thickness of 100 µm (FL12, supplied by Toray Industries, Inc.) was used as the base film.

### [Evaluation methods]

### (1) Average longer diameter and average shorter diameter of the glittering material

Using scanning electron microscope (S-3400N, supplied by Hitachi High-Technologies Corporation), one particle of the glittering material was imaged in two visual fields: one at an angle in which the projected area will be the largest at a 3000-fold magnification; and the other at angle in which the projected area will be the smallest at 30000-fold magnification. The longest length of the particle of the glittering material imaged at an angle providing the largest projected area was determined as the longer diameter of the glittering material. The measurements were performed for 100 particles of the glittering material, and the average of the 100 particles was determined as the average longer diameter of the glittering material. The average shorter diameter of the glittering material was calculated by the same method as described for the average longer diameter, based on the particles of the glittering material imaged at an angle providing the smallest projected area.

### (2) Stress at 100% elongation of coloring layer

A coating material for coloring layer composed of a coating composition as described later was applied on the mold releasing layer side of a mold releasing film having a thickness of 100 µm (Cerapeel MD, supplied by Toray Advanced Film Co., Ltd) using an applicator at a rate of 5 m/min, so that it would have a thickness of 40 µm after drying; and dried at 90°C for 10 minutes to form a coloring layer. The formed coloring layer was peeled off from the mold releasing film and cut into a rectangle with a length of 100 mm and a width of 10 mm to provide an evaluation sample composed solely of the coloring layer. Said sample was subjected to tensile test using tensile tester (Tensilon tester UCT-100, supplied by Orientec Co., Ltd.) under the conditions of an initial chuck distance of 50 mm and a tension speed of 300 mm/min. To make measurements, a film sample was placed in a constant temperature bath controlled at 120°C, and tensile test was started after 60 seconds of preheating to determine the stress at 100% elongation. Three samples were measured for each level, and the average of the three samples was determined as the stress at 100% elongation of said level.

### (3) Rupture elongation of coloring layer

Preparation of the evaluation sample and tensile test were performed in (2). The elongation at which the coloring layer ruptured was determined as the rupture elongation. Three samples were measured for each level, and the average of the three samples was determined as the rupture elongation.

### (4) Degree of orientation of glittering material

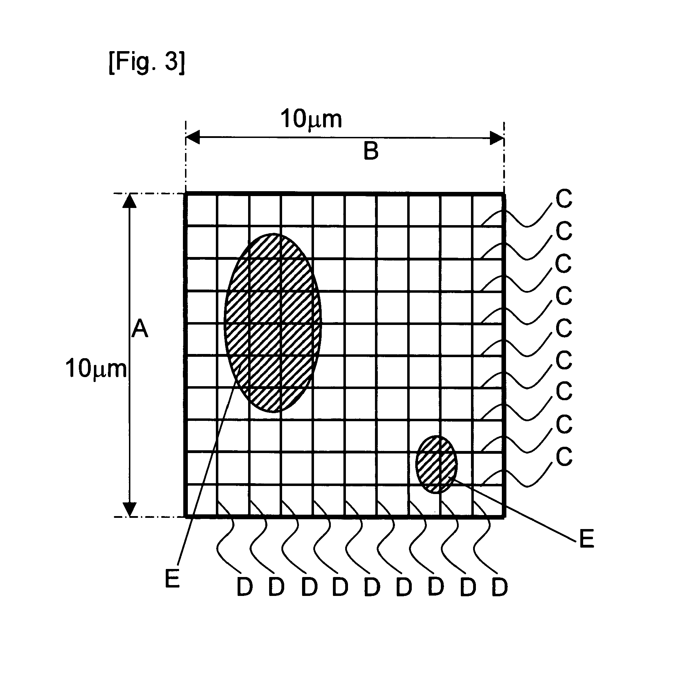

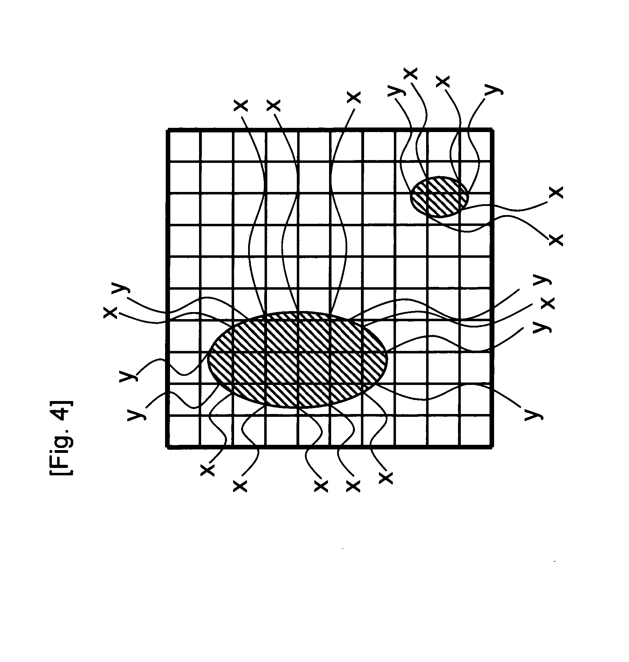

The evaluation sample was prepared by the same method as described in (2). Then the sample was cut so as to provide the smallest projected area. The resulting cross section was observed using scanning electron microscope (S-3400N, supplied by Hitachi High-Technologies Corporation) at a 3000-fold magnification and the image of the cross section was obtained. An arbitrary portion of the obtained image was trimmed into a square of 10 µm by 10 µm (the length in the thickness direction of the coloring layer is 10 µm, and the length in the direction vertical to the thickness direction of the coloring layer is 10 µm). The trimmed image was processed with image processing software so that regions of the glittering material were displayed white, and the other regions were displayed black. In the processed image, 9 lines (line Cs) were drawn to equally divide the image into 10 areas in the thickness direction of the coloring layer, and 9 lines (line Ds) were drawn to equally divide the image into 10 areas in the direction vertical to the thickness direction (See Fig. 3). Then the number of the intersections (x)s of line Cs and particles of the glittering material is counted, and the number of the intersections in the direction vertical to the thickness direction of the coloring layer (X) is determined. The number of the intersections (y)s of line Cs and particles of the glittering material is also counted, and the number of the intersections in the direction vertical to the thickness direction of the coloring layer (Y) is determined. (See Fig. 4. X is 14, and Y is 8 in Fig. 4). The ratio (X/Y) of the number of the intersections in the direction vertical to the thickness direction of the coloring layer (X) to the number of the intersections in the thickness direction of the coloring layer (Y) in the image is then calculated. The ratios (X/Y) for 5 cross sections per sample were calculated, respectively, and the average of these ratios was determined as the degree of orientation of the sample.

### (5) Rupture elongation of base film and protective layer at 120°C

A rectangular evaluation sample with a length of 100 mm and a width of 10 mm was prepared from the decorative molding film produced by the method as described later, and the tensile test was performed by the same method as described in (2). When the elongation of the decorative molding film reached 200%, stretching was terminated and each layer was confirmed visually at that condition, if any rupture has occurred. Three samples were measured for each level, and if no rupture has occurred in all three samples, the rupture elongation was determined to be 200% or more.

### (6) Appearance (undulation)

An acrylic resin plate with a length of 250 mm, width of 100 mm, and thickness of 3 mm was prepared as an object to be decorated, and the decorative molding film as described later and the object to be decorated were placed in a vacuum molding machine (NGF-0406-T, supplied by Fu-se Vacuum Forming Co., Ltd.), so that the coloring layer surface of the former faced the largest surface of the latter. The film was heated to 120°C under vacuum condition, and the decorative molding film was crimped to the object to be decorated, while drawing so as to achieve a draw ratio of 150%. Then the base film was peeled off to obtain an evaluation sample.

The protective layer side of the obtained evaluation sample was scanned using Microwave Scan T (supplied by BYK-Gardner), and the undulation strength of each of the undulation wavelengths W1 to W4 was measured. The undulation strength of each of the undulation wavelengths W1 to W4 is derived by: scanning the sample surface while irradiating laser beam; detecting the strength of the reflected beam (diffusion, condensation) using a sensor; and analyzing them to convert to numeric values. The smaller the numeric value obtained, the less undulation corresponding to each of the undulation wavelengths W1 to W4 there is, indicating that the sample surface is smooth.

Each undulation wavelength and the reference strength for undulation strength are shown below. Those having an undulation strength equal to or less than the reference strength for all of the undulation wavelengths were qualified as A, those having at least one undulation strength greater than the reference strength were qualified as B, and those in which 3 or more of the undulation wavelengths W1 to W4 were qualified as A were determined as "pass" for appearance (undulation).

### <Decorative molding film>

A thermosetting coating material for protective layer (UY30, supplied by Sanyo Chemical Industries, Ltd.) was applied on a base film using an applicator so that it would have a thickness of 20 µm after drying, and dried at 90°C for 10 minutes to form a protective layer. Then a coating material for coloring layer composed of a coating composition as described later was applied on the protective layer using an applicator at a rate of 5 m/min, so that it would have a thickness of 40 µm after drying, and dried and cured at 90°C for 10 minutes to form a coloring layer. The decorative molding film was thus produced.

### <Each undulation wavelength and the reference strength for undulation strength>

undulation wavelength W1 (wavelength: 2.4 mm or more); reference strength: 22
undulation wavelength W2 (wavelength: 0.8 mm or more and less than 2.4 mm); reference strength: 40
undulation wavelength W3 (wavelength: 0.32 mm or more and less than 0.8mm); reference strength: 35
undulation wavelength W4 (wavelength: less than 0.32 mm); reference strength: 20

### (7) Appearance (feeling of glittering)

The evaluation sample formed by the same method as described above in (6) was evaluated visually for feeling of glittering based on the criteria as described below. Those qualified as A or B for feeling of glittering were determined as "pass" for appearance (feeling of glittering), and those qualified as C were determined as "fail" for appearance (feeling of glittering).

### <Criteria>

A: Excellent in feeling of glittering.
B: Good in feeling of glittering.
   (Not qualified as A, but there was no practical problem)
C: Poor in feeling of glittering, and have practical problems.

### (Coating composition)

The following coating compositions A to H were prepared to form coloring layers.

### <Coating composition A>

Coating composition A was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 10.9 µm, average shorter diameter of 0.2 µm, solid component: 71 % by mass, solvent component (mineral spirit): 29% by mass) 3.5 parts by mass

### <Coating composition B>

Coating composition B was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 8.0 µm, average shorter diameter of 0.2 µm, solid component: 71% by mass, solvent component (mineral spirit): 29% by mass ) 3.5 parts by mass

### <Coating composition C>

Coating composition C was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 6.1 µm, average shorter diameter of 0.2 µm, solid component: 71% by mass, solvent component (mineral spirit): 29% by mass ) 3.5 parts by mass

### <Coating composition D>

Coating composition D was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 4.5 µm, average shorter diameter of 0.2 µm, solid component: 71% by mass, solvent component (mineral spirit): 29% by mass ) 3.5 parts by mass

### <Coating composition E>

Coating composition E was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 15.7 µm, average shorter diameter of 0.2 µm, solid component: 71% by mass, solvent component (mineral spirit): 29% by mass ) 3.5 parts by mass

### <Coating composition F>

Coating composition F was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 10.9 µm, average shorter diameter of 0.2 µm, solid component: 71% by mass, solvent component (mineral spirit): 29% by mass ) 7 parts by mass

### <Coating composition G>

Coating composition G was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 10.9 µm, average shorter diameter of 0.2 µm, solid component: 71% by mass, solvent component (mineral spirit): 29% by mass ) 14 parts by mass

### <Coating composition H>

Coating composition H was prepared by mixing the following materials at the compounding ratio given below.
binder resin solution: R2325 clear (solid component 36% by mass, supplied by Nippon Bee Chemical Co., Ltd.) 100 parts by mass
glittering material dispersion liquid: aluminum flakes (average longer diameter of 10.9 µm, average shorter diameter of 0.2 µm, solid component: 71% by mass, solvent component (mineral spirit): 29% by mass ) 20 parts by mass

The viscosity and other properties of coating compositions A to H are shown in Table 1-1 to Table 1-3.

### (Example 1)

A coating material for coloring layer composed of coating composition A as described above was applied on the mold releasing layer side of a mold releasing film having a thickness of 100 µm (Cerapeel MD, supplied by Toray Advanced Film Co., Ltd), using an applicator at a rate of 5 m/min, so that it would have a thickness of 40 µm after drying; and dried at 90°C for 10 minutes to form a coloring layer. The formed coloring layer was peeled off from the mold releasing film and cut into a rectangle with a length of 100 mm and a width of 10 mm to provide an evaluation sample composed solely of the coloring layer. The stress at 100% elongation, rupture elongation and degree of orientation of the obtained evaluation sample are shown in Table 1-2. The stretching stress was low and the rupture elongation was sufficient to provide a good moldability.

In addition, a thermosetting coating material for protective layer (UY30, supplied by Sanyo Chemical Industries, Ltd.) was applied on a base film using an applicator, so that it would have a thickness of 20 µm, and dried at 90°C for 10 minutes to form a protective layer. The coating composition A described above as the coating material for coloring layer was then applied on the protective layer using an applicator at a rate of 5 m/min, so that it would have a thickness of 40 µm, and dried and cured at 90°C for 10 minutes to form a coloring layer. The decorative molding film was thus produced. Then, an acrylic resin plate with a length of 250 mm, width of 100 mm, and thickness of 3 mm was prepared as an object to be decorated, and the decorative molding film as described above and the object to be decorated were placed in a vacuum molding machine (NGF-0406-T, supplied by Fu-se Vacuum Forming Co., Ltd.), so that the coloring layer surface of the former faced the largest surface of the latter. The film was heated to 120°C under vacuum condition, and the decorative molding film was crimped to the object to be decorated, while drawing so as to achieve draw ratio of 150%. Then the base film was peeled off to obtain an evaluation sample. The obtained evaluation sample was evaluated for appearance (undulation, feeling of glittering), and the results are shown in Table 1-3. The sample had a small undulation and an excellent feeling of glittering.

### (Example 2)

The same procedure as in Example 1 except for using coating composition B was performed to obtain an evaluation sample. The obtained evaluation sample was evaluated for stress at 100% elongation, rupture elongation, degree of orientation and appearance (undulation, feeling of glittering), and the results are shown in Tables 1-2 and 1-3. The stretching stress was low and the rupture elongation was sufficient to provide a good moldability. In addition, the sample had a small undulation and an excellent feeling of glittering.

### (Example 3)

The same procedure as in Example 1 except for using coating composition C was performed to obtain an evaluation sample. The obtained evaluation sample was evaluated for stress at 100% elongation, rupture elongation, degree of orientation and appearance (undulation, feeling of glittering), and the results are shown in Tables 1-2 and 1-3. The stretching stress was low and the rupture elongation was sufficient to provide a good moldability. In addition, the sample had a small undulation and was in a good condition. The feeling of glittering was a little lower, but there was no practical problem.

### (Example 4)

The same procedure as in Example 1 except for using coating composition F was performed to obtain an evaluation sample. The obtained evaluation sample was evaluated for stress at 100% elongation, rupture elongation, degree of orientation and appearance (undulation, feeling of glittering), and the results are shown in Tables 1-2 and 1-3. Although the stretching stress was a little higher, both the stretching stress and rupture elongation were sufficient to provide a good moldability. In addition, the sample had a small undulation and an excellent feeling of glittering.

### (Example 5)

The same procedure as in Example 1 except for using coating composition G was performed to obtain an evaluation sample. The obtained evaluation sample was evaluated for stress at 100% elongation, rupture elongation, degree of orientation and appearance (undulation, feeling of glittering), and the results are shown in Tables 1-2 and 1-3. Although the stretching stress was a little higher, both the stretching stress and rupture elongation were sufficient to provide a good moldability. The evaluation for undulation was a little lower compared to other Examples, but there was no practical problem. In addition, it had an excellent feeling of glittering.

### (Comparative Example 1)

The same procedure as in Example 1 except for using coating composition D was performed to obtain an evaluation sample. The obtained evaluation sample was evaluated for stress at 100% elongation, rupture elongation, degree of orientation and appearance (undulation, feeling of glittering), and the results are shown in Tables 1-2 and 1-3. The stretching stress was low and the rupture elongation was sufficient to provide a good moldability. In addition, the sample had a small undulation and was in a good condition. However, it was poor in feeling of glittering, posing practical problems.

### (Comparative Example 2)

The same procedure as in Example 1 except for using coating composition E was performed to obtain an evaluation sample. The obtained evaluation sample was evaluated for stress at 100% elongation, rupture elongation, degree of orientation and appearance (undulation, feeling of glittering), and the results are shown in Tables 1-2 and 1-3. The stretching stress was low and the rupture elongation was sufficient to provide a good moldability. In addition, the sample had an excellent feeling of glittering. However, it had a large undulation, posing practical problems.

### (Comparative Example 3)

The same procedure as in Example 1 except for using coating composition H was performed to obtain an evaluation sample. The obtained evaluation sample was evaluated for stress at 100% elongation, rupture elongation, degree of orientation and appearance (undulation, feeling of glittering), and the results are shown in Table 1. The stretching stress and rupture elongation were not sufficient to provide a good moldability, and the appearance was not measured because the draw ratio was below 150%.

**[Table 1-1]**

| | Coating composition for coloring layer formation | | | | |
|---|---|---|---|---|---|
| | Binder resin solution | | Glittering material dispersion liquid | | Viscosity of coating composition |
| | Parts by mass | Solid component (% by mass) | Parts by mass | Solid component (% by mass) | mPa s (25°C) |
| Example 1 | 100 | 36 | 3.5 | 71 | 1625 |
| Example 2 | 100 | 36 | 3.5 | 71 | 1215 |
| Example 3 | 100 | 36 | 3.5 | 71 | 1100 |
| Example 4 | 100 | 36 | 7.0 | 71 | 2235 |
| Example 5 | 100 | 36 | 14.0 | 71 | 2670 |
| Comparative Example 1 | 100 | 36 | 3.5 | 71 | 1080 |
| Comparative Example 2 | 100 | 36 | 3.5 | 71 | 2125 |
| Comparative Example 3 | 100 | 36 | 20.0 | 71 | 4845 |

**[Table 1-2]**

| | Decorative molding film | | | | | | | |
|---|---|---|---|---|---|---|---|---|
| | Base film and protective layer | Coloring layer | | | | | | |
| | Rupture elongation (%) | Thickness (µm) | Stress at 100% elongation (Mpa) | Rupture elongation (%) | Degree of orientation of glittering material | Glittering material | | |
| | | | | | | Content (% by mass) | Average longer diameter (µm) | Average shorter diameter (µm) |
| Example 1 | >200 | 40 | 1.36 | 385 | 0.46 | 6.5 | 10.9 | 0.2 |
| Example 2 | >200 | 40 | 1.42 | 393 | 0.44 | 6.5 | 8.0 | 0.2 |
| Example 3 | >200 | 40 | 1.38 | 380 | 0.35 | 6.5 | 6.1 | 0.2 |
| Example 4 | >200 | 40 | 2.78 | 344 | 0.46 | 12.1 | 10.9 | 0.2 |
| Example 5 | >200 | 40 | 3.58 | 235 | 0.68 | 21.6 | 10.9 | 0.2 |
| Comparative Example 1 | >200 | 40 | 1.46 | 391 | 0.25 | 6.5 | 4.5 | 0.2 |
| Comparative Example 2 | >200 | 40 | 1.41 | 374 | 0.65 | 6.5 | 15.7 | 0.2 |
| Comparative Example 3 | >200 | 40 | 4.38 | 126 | 0.79 | 28.3 | 10.9 | 0.2 |

**[Table 1-3]**

| | Decorative molding film | | | | | |
|---|---|---|---|---|---|---|
| | Appearance | | | | | |
| | Undulation | | | | | Feeling of glittering |
| | W1 | W2 | W3 | W4 | Determination | |
| Example 1 | A/21.0 | A/24.2 | A/24.3 | A/17.6 | Pass | Pass/A |
| Example 2 | A/19.8 | A/20.7 | A/20.3 | A/19.2 | Pass | Pass/A |
| Example 3 | A/13.4 | A/23.1 | A/23.7 | A/15.0 | Pass | Pass/B |
| Example 4 | A/19.4 | A/29.2 | A/30.1 | A/17.1 | Pass | Pass/A |
| Example 5 | B/25.5 | A/35.4 | A/34.0 | A/19.6 | Pass | Pass/A |
| Comparative Example 1 | A/9.5 | A/18.2 | A/25.6 | A/11.6 | Pass | Fail/C |
| Comparative Example 2 | B/28.5 | B/41.7 | B/42.5 | B/34.6 | Fail | Pass/A |
| Comparative Example 3 | not measured | not measured | not measured | not measured | - | not measured |

### [Industrial applicability]

The decorative molding film of the present invention serves to achieve a good moldability in decorative molding using a heat molding method. The decorative molding film of the present invention is capable of producing a decorated molding having a good surface appearance even when applied to an object to be decorated having a deep-drawn portion (concave portion) with a large molding ratio, making it suitable for decoration of objects to be decorated such as building materials, mobile phones, electrical appliances, game machine parts and automobile parts.

### [Explanation of symbols]

1. base film
2. protective layer
3. coloring layer
A. thickness direction of coloring layer
B. direction vertical to the thickness direction of coloring layer
C. lines dividing the processed image (10 µm ×10 µm) into 10 equal areas in the thickness direction of the coloring layer
D. lines dividing the processed image (10 µm ×10 µm) into 10 equal areas in the direction vertical to the thickness direction of the coloring layer
E. particles of glittering material
x. intersections of line Cs and particles of the glittering material
y. intersections of line Ds and particles of the glittering material

## Claims

1. A decorative molding film having a laminated structure in which a coloring layer, protective layer and a base film are stacked in this order or in which the base film is disposed between the coloring layer and the protective layer, wherein the rupture elongation of said base film and said protective layer at 120°C is 200% or more, wherein said coloring layer comprises at least a binder resin, and a glittering material with an average longer diameter of from 5 to 12 µm, and wherein the stress at 100% elongation of said coloring layer at 120°C is 4 MPa or less.

2. The decorative molding film as claimed in claim 1, wherein the content of said glittering material contained in said coloring layer is from 5 to 15% by mass.

3. The decorative molding film as claimed in claim 1 or 2, wherein said glittering material has an average shorter diameter of from 0.05 to 1 µm.

4. The decorative molding film as claimed in any one of claims 1 to 3, wherein the degree of orientation of said glittering material contained in said coloring layer is within the range of 0.3 or more and 0.7 or less.

5. A method for producing a decorated molding comprising bonding the decorative molding film as claimed in any one of claims 1 to 4 to an object to be decorated by heat molding.
